# EUROPÄISCHE PATENTSCHRIFT

(11) **EP 3 596 362 B1**
(45) Veröffentlichungstag und Bekanntmachung des Hinweises auf die Patenterteilung: **03.08.2022**
(21) Anmeldenummer: 18709513.8
(22) Anmeldetag: 01.03.2018
(51) Int. Cl.: F16H 61/00

(54) **VERFAHREN ZUR ANSTEUERUNG EINES AUTOMATGETRIEBES UND GETRIEBESTEUERGERÄT**
METHOD FOR ACTUATING AN AUTOMATIC TRANSMISSION AND TRANSMISSION CONTROL DEVICE
PROCÉDÉ DE COMMANDE D'UNE BOÎTE DE VITESSES AUTOMATQUE ET APPAREIL DE COMMANDE

(30) Priorität: 15.03.2017 DE 102017105486
(43) Veröffentlichungstag der Anmeldung: 22.01.2020
(73) Patentinhaber: Voith Patent GmbH, 89522 Heidenheim (DE)
(72) Erfinder: LAZARENKA, Vitali, 73433 Aalen (DE); GÖTTE, Johannes, 73460 Hüttlingen (DE)
(74) Vertreter: Voith Patent GmbH - Patentabteilung
(86) Internationale Anmeldenummer: PCT/EP2018/055021
(87) Internationale Veröffentlichungsnummer: WO 2018/166803

(56) Entgegenhaltungen:
- EP-A1- 1 995 498
- DE-A1-102006 014 756
- DE-A1-102007 002 166
- DE-B4-102007 003 923

## Beschreibung

Die vorliegende Erfindung betrifft ein Verfahren zur Ansteuerung eines Automatgetriebes in einer Start-Stopp-Funktion eines Kraftfahrzeugs gemäß dem Oberbegriff des Patentanspruchs 1. Die vorliegende Erfindung betrifft ferner ein Getriebesteuergerät.

Automatgetriebe, die einen hydrodynamische Drehmomentwandler zur Schlupfüberbrückung aufweisen, wie sie die vorliegende Erfindung insbesondere betrifft, sind im Antriebsstrang eines Kraftfahrzeugs zwischen dem Verbrennungsmotor und den Antriebsrädern angeordnet, um durch Schalten verschiedener Gangstufen das Drehmoment und die Übersetzung der Drehzahl zwischen der Abtriebswelle des Verbrennungsmotors und der Antriebswelle der Antriebsräder zu variieren. Zum Schalten der verschiedenen Gangstufen ist eine entsprechende Anzahl von in der Regel nasslaufendenden Lamellenkupplungen und -bremsen vorgesehen, gegebenenfalls ergänzt um hydraulische oder hydrodynamische Komponenten, die mit einem Druckmedium, insbesondere Öl, aus einer hydraulischen Druckversorgung des Hydrauliksystems des Getriebes versorgt und druckbeaufschlagt werden, um das Schalten der jeweiligen gewünschten Gangstufe zu bewirken. Im Hydrauliksystem sind elektrisch gesteuerte Ventile vorgesehen, die die Druckbeaufschlagung der Schaltelemente im Getriebe mit Druckmedium aus der Druckversorgung entsprechend ihrer Ventilstellung freigeben oder unterbinden. Die Ventile können als vorgesteuerte Ventile ausgeführt sein, bei welchen mit einer relativ geringen Kraft eines im jeweiligen Ventil vorgesehenen Elektromagneten vergleichsweise große Durchflussmengen bei hohen Drücken gesteuert werden können. In anderen Ausführungsformen, wie sie die vorliegende Erfindung besonders betrifft, werden direktgesteuerte Ventile vorgesehen, deren Magnetkraft des Elektromagneten direkt zum Öffnen oder Schließen des Ventils verwendet wird. Ihr Vorteil liegt darin, dass sie keinen Mindestbetriebsdruck beziehungsweise Differenzdruck für die Schaltung benötigen.

Zur Reduzierung des Kraftstoffverbrauchs, von Schadstoffemissionen und des Lärmpegels wird bei modernen Fahrzeugen eine Start-Stopp-Funktion vorgesehen, wonach der Verbrennungsmotor des Kraftfahrzeugs beim Anhalten automatisch abgeschaltet wird und für die Wiederanfahrt automatisch wieder eingeschaltet wird. Dabei ist es wünschenswert, dass das Anfahren des Kraftfahrzeugs beim oder nach dem Schalten aus der Stopp-Phase in die Start-Phase möglichst schnell erfolgen kann. Problematisch ist jedoch, dass beim Stoppen des Verbrennungsmotors bereits nach kurzer Zeit der Versorgungsdruck der hydraulischen Druckversorgung im Getriebe, der sogenannte Arbeitsdruck, abfällt und damit der Kraftschluss im Getriebe über die einzelnen Schaltelemente nicht aufrechterhalten werden kann. Das Getriebe schaltet demnach in die Neutralstellung. Beim Übergang in die Start-Phase muss dann zunächst ausreichend neuer Druck im Hydrauliksystem beziehungsweise in deren Druckversorgung aufgebaut werden, bevor das Getriebe wieder in den gewünschten Anfahrgang geschaltet werden kann.

Um die hierfür benötigte Zeit zu reduzieren, schlägt DE 10 2007 003 923 B4 für ein Automatgetriebe vor, beim Abschalten des Verbrennungsmotors in einer Stopp-Phase unabhängig von einem hydraulischen Versorgungsdruck im Hydrauliksystem mittels direktgesteuerten elektrischen Ventilen einen Anfahrgang des Automatgetriebes elektrisch zu schalten und diese Schaltung beizubehalten. Nachteilig hierbei ist jedoch, dass die beibehaltene Schaltung eine andauernde Stromversorgung beziehungsweise das Anlegen einer elektrischen Spannung an die elektrisch gesteuerten Ventile erfordert, was zu einem erhöhten Energieverbrauch im Fahrzeugbordnetz führt und die Elektromagneten belastet.

Aus der DE 10 2006 014 756 A1 und der DE 10 2007 002 166 A1 sind Getriebeeinrichtungen mit einer Speichereinrichtung bekannt, mittels der die Ventile nach dem Startvorgang schneller geschaltet werden können, so dass nicht erst auf den Druckaufbau durch die Getriebepumpe gewartet werden muss.

Der vorliegenden Erfindung liegt daher die Aufgabe zugrunde, ein Verfahren zur Ansteuerung eines Automatgetriebes in einer Start-Stopp-Funktion eines Kraftfahrzeugs anzugeben, welches auf der einen Seite ein rasches Wiederanfahren des Kraftfahrzeugs beim Übergang von einer Stopp-Phase in eine Start-Phase ermöglicht und auf der anderen Seite den elektrischen Energieverbrauch in der Stopp-Phase reduziert.

Die erfindungsgemäße Aufgabe wird durch ein Verfahren mit den Schritten des Anspruchs 1 sowie ein Getriebesteuergerät, das zur Ausführung eines erfindungsgemäßen Verfahrens eingerichtet ist, gemäß Anspruch 8 gelöst. In den abhängigen Ansprüchen sind besonders vorteilhafte Ausgestaltungen der Erfindung angegeben.

Das erfindungsgemäße Verfahren zur Ansteuerung eines Automatgetriebes in einer Start-Stopp-Funktion (auch Start-Stopp-Modus genannt) eines Kraftfahrzeugs sieht vor, dass beim Schalten in eine Stopp-Phase, bei welcher der Verbrennungsmotor des Kraftfahrzeugs, über welchen das Automatgetriebe angetrieben wird, abgeschaltet wird, eine Mehrzahl oder alle elektrisch gesteuerten Ventile, die, wie nachfolgend noch erläutert wird, zum Schalten der Schaltelemente dienen, stromlos geschaltet werden, und bereits beim Schalten oder unmittelbar nach dem Schalten in eine Start-Phase, bei welcher der Verbrennungsmotor eingeschaltet wird, die elektrisch gesteuerten Ventile zum Einlegen einer Gangstufe zum Anfahren des Kraftfahrzeugs bestromt, das heißt mit einer elektrischen Spannung beaufschlagt werden. Die elektrische Spannungsbeaufschlagung der elektrisch gesteuerten Ventile erfolgt damit vorteilhaft mit Beginn des Starvorganges des Verbrennungsmotors, in der Regel bevor der Arbeitsdruckaufbauvorgang im Hydrauliksystem des Getriebes abgeschlossen ist. Erfindungsgemäß erfolgt somit die Spannungsbeaufschlagung der elektrisch gesteuerten Ventile beim Schalten oder unmittelbar nach dem Schalten in die Start-Phase bevor ein Aufbau eines Versorgungsdruckes in der hydraulischen Druckversorgung zur Druckbeaufschlagung der Schaltelemente in dem Getriebe abgeschlossen ist.

Im Einzelnen weist das von einem Verbrennungsmotor des Kraftfahrzeugs angetriebene Getriebe ein Hydrauliksystem mit einer hydraulischen Druckversorgung und mit den elektrisch gesteuerten Ventilen sowie eine Vielzahl von Schaltelementen auf, die durch Druckbeaufschlagung mit einem Druckmedium aus der hydraulischen Druckversorgung und Ansteuern der Ventile zur Einstellung verschiedener Gangstufen im Getriebe geschaltet werden. Wenn das jeweilige Ventil geöffnet wird, lässt es entsprechend Druckmedium in Richtung des jeweils angeschlossenen Schaltelementes durch, wohingegen das Ventil, wenn es geschlossen wird, diese Druckbeaufschlagung unterbindet. Auch können entsprechende Ventile eingesetzt werden, um einen Druck aus der hydraulischen Druckversorgung abzubauen, somit ein entsprechendes Schaltelement drucklos beziehungsweise auf Tank zu schalten.

Bevorzugt sind die elektrisch gesteuerten Ventile als direktgesteuerte Ventile ausgeführt, wobei entsprechend jedes Ventil wenigstens einen Elektromagneten aufweist, der durch elektrische Spannungsbeaufschlagung eine Magnetkraft erzeugt, um das jeweilige Ventil mit dieser Magnetkraft unmittelbar zu öffnen oder zu schließen. Es handelt sich demnach somit nicht um ein vorgesteuertes Ventil.

Günstig ist, wenn das Schalten in die Start-Phase durch ein Fahrzeugsteuergerät signalisiert wird und die elektrische Spannungsbeaufschlagung der elektrisch gesteuerten Ventile zum Einlegen einer Gangstufe zum Anfahren des Kraftfahrzeugs in Abhängigkeit der Erfassung dieses Signals des Fahrzeugsteuergeräts erfolgt. Zusätzlich oder alternativ kommen auch andere Signale oder Zustandsgrößen in Betracht, die erfasst beziehungsweise ausgewertet werden können, um mit der elektrische Spannungsbeaufschlagung der elektrisch gesteuerten Ventile zum Einlegen einer Gangstufe zum Anfahren des Kraftfahrzeugs zu beginnen. Beispielsweise kann die Drehzahl einer Getriebewelle, insbesondere der Getriebeeingangswelle, ausgewertet werden und/oder eine Drehzahl oder ein Zündvorgang im Verbrennungsmotor. Andere Größen sind vorstellbar. Beispielsweise kann auch eine vorausschauende Funktion in einem Getriebesteuergerät integriert sein, die anhand vorgegebener Größen feststellt, wann in die Start-Phase geschaltet wird.

Erfindungsgemäß werden beim Schalten in die Start-Phase die elektrisch gesteuerten Ventile zum Einlegen eines ersten Ganges und zum Befüllen eines im Automatgetriebe vorgesehenen hydrodynamischen Drehmomentwandlers mit Druckmedium aus der hydraulischen Druckversorgung des Getriebes mit elektrischer Spannung beaufschlagt.

Gemäß einer Ausführungsform der Erfindung weist die hydraulische Druckversorgung im Getriebe eine Druckmediumpumpe auf, die vom Verbrennungsmotor angetrieben wird, sodass das Druckmedium durch Antreiben der Druckmediumpumpe auf den gewünschten Versorgungsdruck für die Schaltelemente, auch Arbeitsdruck genannt, und insbesondere für den hydrodynamischen Drehmomentwandler gebracht wird. Dabei kann diese vom Verbrennungsmotor angetriebene Druckmediumpumpe die einzige Pumpe in der hydraulischen Druckversorgung und insbesondere auch im Hydrauliksystem des Getriebes sein.

Insbesondere erfolgt beim Schalten in die Stopp-Phase eine Reduzierung des Druckes in der hydraulischen Druckversorgung. Diese Druckreduzierung kann durch Undichtigkeiten in der hydraulischen Druckversorgung erfolgen oder gemäß einer besonderen Ausführungsform auch gezielt eingestellt werden.

Beim Schalten in die Stopp-Phase wird das Getriebe vorzugsweise in eine Neutralstellung geschaltet, in welcher die Triebverbindung zwischen der Getriebeeingangswelle und der Getriebeausgangswelle unterbrochen ist.

Ein erfindungsgemäßes Getriebesteuergerät weist wenigstens einen Prozessor und wenigstens einen Speicher auf und ist eingerichtet, ein erfindungsgemäßes Verfahren auszuführen. Demgemäß ist im Getriebesteuergerät ein vom Getriebesteuergerät ausführbares Programm beziehungsweise Programmcode hinterlegt. Das Getriebesteuergerät kann als separates Steuergerät zusätzlich zu einem Fahrzeugsteuergerät vorgesehen sein. Alternativ ist es jedoch auch möglich, das Getriebesteuergerät funktional in ein anderes Steuergerät im Kraftfahrzeug, beispielsweise das Fahrzeugsteuergerät oder ein Motorsteuergerät, zu integrieren.

Die Erfindung soll nachfolgend anhand eines Ausführungsbeispiels und der Figur exemplarisch beschrieben werden.

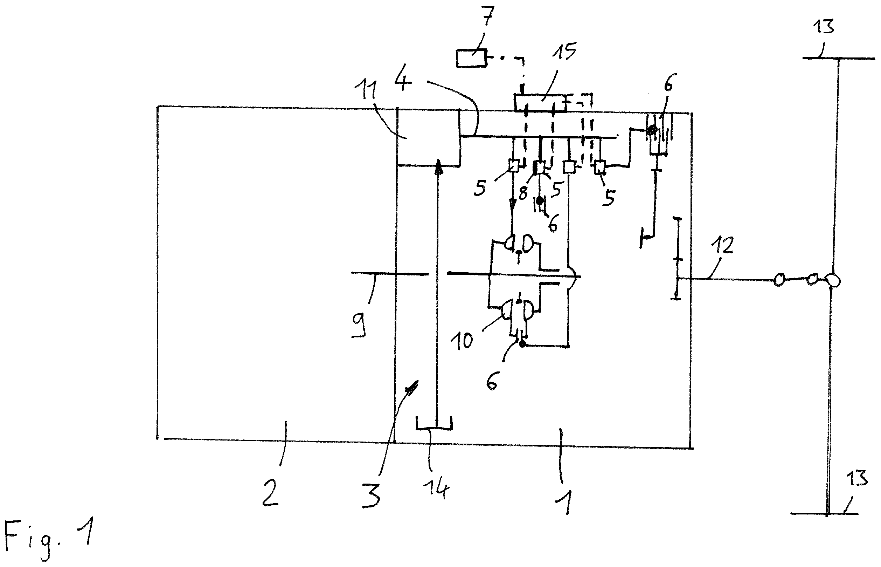

In der Figur 1 ist schematisch ein Kraftfahrzeugantriebsstrang dargestellt, mit einem Automatgetriebe 1, das in der Triebverbindung zwischen einem Verbrennungsmotor 2 und Antriebsrädern 13 des Kraftfahrzeugs angeordnet ist.

Das Automatgetriebe 1 weist ein Hydrauliksystem 3 mit einer hydraulischen Druckversorgung 4 auf. In der hydraulischen Druckversorgung 4 wird ein druckbeaufschlagtes Druckmedium für Schaltelemente 6 des Automatgetriebes 1 zur Verfügung gestellt. Um den notwendigen hydraulischen Druck in der hydraulischen Druckversorgung 4 aufzubauen, ist eine Druckmediumpumpe 11 vorgesehen, die vom Verbrennungsmotor 2 angetrieben wird. Die hydraulische Druckversorgung 4 kann auch als Druckschiene bezeichnet werden, die einen Arbeitsdruck zur Verfügung stellt.

Um den hydraulischen Druck aus der hydraulischen Druckversorgung 4 nun gezielt einzelnen Schaltelementen zur Verfügung zu stellen oder die Druckbeaufschlagung der einzelnen Schaltelemente 6 zu beenden, sind elektrisch gesteuerte Ventile 5 in den hydraulischen Verbindungen zwischen der hydraulischen Druckversorgung 4 und den Schaltelementen 6 vorgesehen, die durch Öffnen und Schließen den jeweiligen Schaltelementen 6 den gewünschten Druck zuführen oder diese drucklos schalten beziehungsweise von der Druckversorgung 4 abtrennen. Obwohl dies nicht dargestellt ist, sind in der Regel entsprechende Tankleitungen zum Tank 14 vorgesehen, um Druckmedium aus den Schaltelementen 6 abzuleiten. Auch in solchen Tankleitungen können entsprechende elektrisch gesteuerte Ventile vorgesehen sein.

Wie anhand eines elektrisch gesteuerten Ventils 5 dargestellt ist, weisen diese wenigstens einen Elektromagneten 8 auf, der mit Strom aus einem Getriebesteuergerät 15 versorgt wird, um das jeweilige Ventil 5 zu öffnen oder zu schließen. Das bedeutet, zum Betätigen des Ventils 5 mit dem Elektromagneten 8 wird an diesen eine elektrische Spannung angelegt, die einen entsprechenden Stromfluss durch die Wicklung des Elektromagneten 8 und die Erzeugung eines Magnetfeldes, das einen Ventilkörper des Ventils 5 kraftbeaufschlagt und in die gewünschte Schaltstellung bewegt, bewirkt.

Im gezeigten Ausführungsbeispiel ist das Getriebesteuergerät 15 an ein Fahrzeugsteuergerät 7 angeschlossen. Somit kann das Getriebesteuergerät 15 ein Signal vom Fahrzeugsteuergerät 7 erfassen, wobei das Signal anzeigt, dass das Fahrzeug in eine Start-Phase geschaltet wird, also der Verbrennungsmotor 2 eingeschaltet werden soll. Dementsprechend werden die elektrisch gesteuerten Ventile 5 sofort mit Beginn der Start-Phase beziehungsweise beim Schalten in die Start-Phase derart mit elektrischer Spannung beaufschlagt, dass sie ihre Ventilstellung einnehmen, die zum Einlegen einer bestimmen Gangstufe zum Anfahren des Kraftfahrzeugs notwendig ist. Somit werden entsprechend dieser Ventilstellung die entsprechenden Schaltelemente 6 geschaltet, die dann das Einlegen der gewünschten Gangstufe zum Anfahren des Kraftfahrzeugs bewirken, zumindest sobald bei bereits geschalteten Ventilen 5 auch der Versorgungsdruck der Schaltelemente 6 das notwendige Niveau erreicht hat. Dieser Druckaufbau kann und wird in der Regel gegenüber der Schaltung der Ventile 5 verzögert erfolgen.

Im Automatgetriebe 1 ist ein hydrodynamischer Drehmomentwandler 10 vorgesehen, der insbesondere zum Anfahren des Kraftfahrzeugs herangezogen werden kann. Demgemäß werden die Ventile 5 derart beim Schalten oder unmittelbar nach dem Schalten in die Start-Phase geschaltet, dass der Arbeitsraum des hydrodynamischen Drehmomentwandlers 10 mit Druckmedium aus der hydraulischen Druckversorgung 4 als Arbeitsmedium befüllt wird. Wenn der Anfahrvorgang abgeschlossen ist, können dann das Pumpenrad und das Turbinenrad des hydrodynamischen Drehmomentwandlers 10 mittels einem Schaltelement 6 in Form einer Kupplung überbrückt werden.

Anstelle oder zusätzlich zum Erfassen eines Signals aus dem Fahrzeugsteuergerät 7 kann das Schalten in die Start-Phase auch durch Auswerten einer Drehzahl einer Motorwelle oder Getriebewelle, beispielsweise der Getriebeeingangswelle 9, überwacht werden.

Die verschiedenen Gangstufen, die durch Schalten der Schaltelemente 6 im Automatgetriebe 1 eingestellt werden können, unterscheiden sich durch das Übersetzungsverhältnis zwischen der Getriebeeingangswelle 9 und der Getriebeausgangswelle 12.

### Bezugszeichenliste

- 1: Automatgetriebe
- 2: Verbrennungsmotor
- 3: Hydrauliksystem
- 4: hydraulische Druckversorgung
- 5: Ventil
- 6: Schaltelement
- 7: Fahrzeugsteuergerät
- 8: Elektromagnet
- 9: Getriebeeingangswelle
- 10: hydrodynamischer Drehmomentwandler
- 11: Druckmediumpumpe
- 12: Getriebeausgangswelle
- 13: Antriebsräder
- 14: Tank
- 15: Getriebesteuergerät

## Patentansprüche

1. Verfahren zur Ansteuerung eines Automatgetriebes (1), mit einem im Automatgetriebe (1) vorgesehenen hydrodynamischen Drehmomentwandler (10), mit einem Start-Stopp-Modus in einem Kraftfahrzeug, wobei das von einem Verbrennungsmotor (2) des Kraftfahrzeugs angetriebene Getriebe ein Hydrauliksystem (3) mit einer hydraulischen Druckversorgung (4) und elektrisch gesteuerten Ventilen (5) sowie eine Vielzahl von Schaltelementen (6) umfasst, die durch Druckbeaufschlagung mit einem Druckmedium aus der hydraulischen Druckversorgung (4) und Ansteuern der Ventile (5) zur Einstellung verschiedener Gangstufen im Getriebe geschaltet werden, **dadurch gekennzeichnet, dass**
beim Schalten in eine Stopp-Phase, bei welcher der Verbrennungsmotor (2) abgeschaltet wird, eine Mehrzahl oder alle elektrisch gesteuerten Ventile (5) stromlos geschaltet werden, und beim Schalten oder unmittelbar nach dem Schalten in eine Start-Phase, bei welcher der Verbrennungsmotor (2) eingeschaltet wird, die elektrisch gesteuerten Ventile (5) zum Einlegen eines ersten Ganges und zum Befüllen, des im Automatgetriebe (1) vorgesehenen hydrodynamischen Drehmomentwandlers (10) mit dem Druckmedium, mit elektrischer Spannung beaufschlagt werden, bevor ein Aufbau eines Versorgungsdruckes in der hydraulischen Druckversorgung (4) zur Druckbeaufschlagung der Schaltelemente (6) abgeschlossen ist.

2. Verfahren gemäß Anspruch 1, **dadurch gekennzeichnet, dass** die elektrisch gesteuerten Ventile (5) als direktgesteuerte Ventile ausgeführt sind, die wenigstens einen Elektromagneten (8) aufweisen, der durch die elektrische Spannungsbeaufschlagung eine Magnetkraft erzeugt, um das jeweilige Ventil (5) zu öffnen oder zu schließen.

3. Verfahren gemäß einem der Ansprüche 1 oder 2, **dadurch gekennzeichnet, dass** das Schalten in die Start-Phase durch ein Fahrzeugsteuergerät (7) signalisiert wird und die elektrische Spannungsbeaufschlagung der elektrisch gesteuerten Ventile (5) zum Einlegen einer Gangstufe zum Anfahren des Kraftfahrzeugs in Abhängigkeit des Erfassens dieses Signals des Fahrzeugsteuergerätes (7) und/oder durch Auswerten einer Drehzahl einer Getriebewelle und/oder durch Auswerten einer Drehzahl oder eines Zündvorgangs im Verbrennungsmotor (2) gesteuert wird.

4. Verfahren gemäß einem der Ansprüche 1 bis 3, **dadurch gekennzeichnet, dass** die hydraulische Druckversorgung (4) eine Druckmediumpumpe (11) aufweist, die vom Verbrennungsmotor (2) angetrieben wird, und das Druckmedium durch Antreiben der Druckmediumpumpe (11) auf einen Versorgungsdruck für die Schaltelemente (6) und insbesondere den hydrodynamischen Drehmomentwandler (10) gefördert wird.

5. Verfahren gemäß Anspruch 4, **dadurch gekennzeichnet, dass** die vom Verbrennungsmotor (2) angetriebene Druckmediumpumpe (11) die einzige Pumpe in der hydraulischen Druckversorgung (4) ist.

6. Verfahren gemäß einem der Ansprüche 1 bis 5, **dadurch gekennzeichnet, dass** beim Schalten in die Stopp-Phase eine Reduzierung des Druckes in der hydraulischen Druckversorgung (4) erfolgt.

7. Verfahren gemäß einem der Ansprüche 1 bis 6, **dadurch gekennzeichnet, dass** beim Schalten in die Stopp-Phase das Getriebe in eine Neutralstellung geschaltet wird, in welcher die Triebverbindung zwischen einer Getriebeeingangswelle (9) zu einer Getriebeausgangswelle (12) unterbrochen ist.

8. Getriebesteuergerät (15) mit wenigstens einem Prozessor und einem Speicher, eingerichtet, um ein Verfahren gemäß einem der Ansprüche 1 bis 7 auszuführen.

## Claims

1. Method for actuating an automatic transmission (1), having a hydrodynamic torque converter (10) provided in the automatic transmission (1), having a start/stop mode in a motor vehicle, wherein the transmission driven by an internal combustion engine (2) of the motor vehicle comprises a hydraulics system (3) having a hydraulic pressure supply (4) and electrically controlled valves (5) and a multiplicity of switching elements (6) which, by impingement with pressure by a pressurized medium from the hydraulic pressure supply (4) and actuation of the valves (5), are switched for adjusting different gear stages in the transmission, **characterized in that**
when switching to a stop phase in which the internal combustion engine (2) is switched off, a plurality or all of the electrically controlled valves (5) are de-energized, and when switching, or directly upon switching, to a start phase in which the internal combustion engine (2) is switched on, the electrically controlled valves (5) for shifting to a first gear and for filling the hydrodynamic torque converter (10) provided in the automatic transmission (1) with the pressurized medium are impinged with an electric voltage before a build-up of a supply pressure in the hydraulic pressure supply (4) for impinging the switching elements (6) with pressure has been completed.

2. Method according to Claim 1, **characterized in that** the electrically controlled valves (5) are embodied as directly controlled valves that have at least one solenoid (8) which, as a result of the impingement with an electric voltage, generates a magnetic force for opening or closing the respective valve (5).

3. Method according to one of Claims 1 and 2, **characterized in that** the switching to the start phase is signalled by a vehicle control apparatus (7), and the impingement of the electrically controlled valves (5) with an electric voltage for shifting to a gear stage for starting travel of the motor vehicle is controlled as a function of the detection of this signal of the vehicle control apparatus (7) and/or by evaluating a rotating speed of a transmission shaft and/or by evaluating a rotating speed or an ignition procedure in the internal combustion engine (2).

4. Method according to one of Claims 1 to 3, **characterized in that** the hydraulic pressure supply (4) has a pressurized medium pump (11) which is driven by the internal combustion engine (2), and the pressurized medium is conveyed by driving the pressurized medium pump (11) to a supply pressure for the switching elements (6) and in particular the hydrodynamic torque converter (10).

5. Method according to Claim 4, **characterized in that** the pressurized medium pump (11) driven by the internal combustion engine (2) is the only pump in the hydraulic pressure supply (4).

6. Method according to one of Claims 1 to 5, **characterized in that** a reduction of the pressure in the hydraulic pressure supply (4) takes place when switching to the stop phase.

7. Method according to one of Claims 1 to 6, **characterized in that**, when switching to the stop phase, the transmission is switched to a neutral position in which the operative connection between a transmission input shaft (9) and a transmission output shaft (12) is interrupted.

8. Transmission control apparatus (15) having at least one processor and one memory, set up to carry out a method according to one of Claims 1 to 7.

## Revendications

1. Procédé de commande d'une boîte de vitesses automatique (1), comportant un convertisseur de couple hydrodynamique (10) prévu dans la boîte de vitesses automatique (1), comportant un mode arrêt-démarrage dans un véhicule automobile, la boîte de vitesses entraînée par un moteur à combustion interne (2) du véhicule automobile comprenant un système hydraulique (3) doté d'une alimentation en pression hydraulique (4) et des soupapes (5) à commande électrique ainsi qu'une pluralité d'éléments de commutation (6) qui sont commutés par application de pression avec un fluide sous pression à partir de l'alimentation en pression hydraulique (4) et commande des soupapes (5) pour régler différents rapports de vitesse dans la boîte de vitesses,
**caractérisé en ce que**,
lors de la commutation à une phase d'arrêt, dans laquelle le moteur à combustion interne (2) est coupé, une pluralité de soupapes à commande électrique ou toutes les soupapes à commande électrique (5) sont commutées sans courant et, lors de la commutation ou immédiatement après la commutation à une phase de démarrage, dans laquelle le moteur à combustion interne (2) est en marche, les soupapes (5) à commande électrique sont soumises à une tension électrique pour l'enclenchement d'une première vitesse et pour le remplissage du convertisseur de couple hydrodynamique (10) prévu dans la boîte de vitesses automatique (1) avec le fluide sous pression, avant qu'une augmentation d'une pression d'alimentation dans l'alimentation en pression hydraulique (4) pour la sollicitation en pression des éléments de commutation (6) soit finie.

2. Procédé selon la revendication 1, **caractérisé en ce que** les soupapes (5) à commande électrique sont réalisées sous forme de soupapes à commande directe qui présentent au moins un électroaimant (8) qui produit une force magnétique par l'application de tension électrique, afin d'ouvrir ou de fermer la soupape (5) respective.

3. Procédé selon l'une des revendications 1 ou 2, **caractérisé en ce que** la commutation à la phase de démarrage est signalée par un appareil de commande de véhicule (7) et l'application de tension électrique aux soupapes (5) à commande électrique pour l'enclenchement d'un rapport de vitesse pour le démarrage du véhicule automobile est commandée en fonction de la détection de ce signal de l'appareil de commande de véhicule (7) et/ou par évaluation d'une vitesse de rotation d'un arbre de boîte de vitesses et/ou par évaluation d'une vitesse de rotation ou d'une procédure d'allumage dans le moteur à combustion interne (2).

4. Procédé selon l'une des revendications 1 à 3, **caractérisé en ce que** l'alimentation en pression hydraulique (4) présente une pompe à fluide sous pression (11) qui est entraînée par le moteur à combustion interne (2), et le fluide sous pression est, par entraînement de la pompe à fluide sous pression (11), refoulé à une pression d'alimentation pour les éléments de commutation (6) et en particulier le convertisseur de couple hydrodynamique (10).

5. Procédé selon la revendication 4, **caractérisé en ce que** la pompe à fluide sous pression (11) entraînée par le moteur à combustion interne (2) est la seule pompe dans l'alimentation en pression hydraulique (4).

6. Procédé selon l'une des revendications 1 à 5, **caractérisé en ce que** lors de la commutation à la phase d'arrêt, une réduction de la pression dans l'alimentation en pression hydraulique (4) a lieu.

7. Procédé selon l'une des revendications 1 à 6, **caractérisé en ce que** lors de la commutation à la phase d'arrêt, la boîte de vitesses est commutée à une position neutre dans laquelle la liaison d'entraînement entre un arbre d'entrée de boîte de vitesses (9) et un arbre de sortie de boîte de vitesses (12) est interrompue.

8. Appareil de commande de boîte de vitesses (15) comportant au moins un processeur et une mémoire, conçu pour mettre en œuvre un procédé selon l'une des revendications 1 à 7.
